(19) Europäisches Patentamt
European Patent Office
Office européen des brevets

(11) EP 3 728 470 B1

(12) **EUROPEAN PATENT SPECIFICATION**

(45) Date of publication and mention of the grant of the patent:
**20.10.2021 Bulletin 2021/42**

(21) Application number: **18819104.3**

(22) Date of filing: **14.12.2018**

(51) Int Cl.:
***C08L 69/00*** *(2006.01)*
***C08L 67/00*** *(2006.01)*
***C08K 3/013*** *(2018.01)*
***C08L 101/00*** *(2006.01)*

(86) International application number:
**PCT/EP2018/084867**

(87) International publication number:
**WO 2019/121356 (27.06.2019 Gazette 2019/26)**

(54) **POLYCARBONATE COMPOSITION**

POLYCARBONATZUSAMMENSETZUNG

COMPOSITION DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2017 CN 201711399033**
**02.03.2018 EP 18159695**

(43) Date of publication of application:
**28.10.2020 Bulletin 2020/44**

(73) Proprietor: **Covestro Deutschland AG**
**51373 Leverkusen (DE)**

(72) Inventors:
- **GU, Jianfeng**
  **Shanghai, 200137 (CN)**
- **WANG, Xiaoxiang**
  **Shanghai 200123 (CN)**

(74) Representative: **Levpat**
**c/o Covestro AG**
**Gebäude 4825**
**51365 Leverkusen (DE)**

(56) References cited:
**US-A1- 2009 118 417**
**US-A1- 2010 324 189**
**US-A1- 2016 194 495**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention belongs to the field of polycarbonates, and particularly relates to a polycarbonate composition as well as a molded article thereof with enhanced impact strength and good tensile elongation at break.

Reinforced aromatic polycarbonate compositions have been widely applied to various industries, for example, electronic equipment housings as well as automotive interior and exterior trims. These applications generally require materials with the properties of higher rigidity, stronger impact strength, better surface aesthetics and the like. In the design of thin-walled structures, especially thin-walled housings of electronic equipment, polycarbonate composition materials generally should also have high flowability in the molding process.

In general, the rigidity of polycarbonate compositions can be achieved by adding highly rigid fillers. There are various kinds of fillers. In thin-walled structure applications, materials such as fibers (e.g. glass fibers) may cause warpage and poor surface appearance of articles while mineral fillers with a smaller particle size and a sheet-like shape such as wollastonite, mica, kaolin and talc may be more suitable. In general, mineral fillers can provide polycarbonate compositions with improved rigidity and modulus while reducing the tensile elongation at break and impact strength of the polycarbonate compositions, because polar functional groups on particle surfaces of mineral fillers such as kaolin, wollastonite, talc and inorganic whiskers generally cannot be well compatible with a non-polar polymer matrix in the blending process, thus resulting in uneven dispersion and reducing the impact resistance of materials. In addition, acidic or basic groups on the surfaces of the fillers may also degrade polycarbonates to a certain degree.

Accordingly, it is a challenge in this field to provide a polycarbonate composition with high impact strength and flowability as well as good tensile elongation at break and surface appearance.

The addition of rubber impact modifiers such as acrylonitrile-butadiene-styrene copolymers (ABS), methyl methacrylate-butadiene-styrene copolymers (MBS), acrylic rubber, silicone rubber, and ethylene copolymers is a common method for improving the impact strength of polycarbonate compositions. For polycarbonate compositions filled with mineral fillers, these methods generally can only slightly improve impact strength with some other negative effects, for example, reduced flowability, increased mold shrinkage and coefficient of linear thermal expansion (CLTE), reduced flame retardancy (using non-silicone rubber) and the like.

A technical solution of using special non-rubber additives in polycarbonate compositions has also been developed in the industry.

US8871858 discloses a talc-filled polycarbonate composition to which a small amount of a polymethylhydrogensiloxane (PMHS) is added. MBS and ABS HRG (High Rubber Grafted ABS) are used as impact modifiers. The notched impact strength is increased from 9.9 $kJ/m^2$ for the composition with no PMHS to 19.9 $kJ/m^2$ for the composition comprising 0.4 wt. % PMHS.

US8883878 discloses a polycarbonate composition to which surface-coated titanium dioxide ($TiO_2$) is added. If titanium dioxide is coated with a surface treatment consisting of aluminum, silicon, polysiloxane and polyalcohol compounds, the notched impact strength at room temperature can be improved.

US 2012/0245262 A1 discloses that the addition of a sulfonate salt and an acid can improve the impact strength of a talc-filled polycarbonate compound. The sulfonate salts used include sodium alkylsulfonate (SAS) and sodium dodecylsulfonate (SDBS), which improve the notched impact strength, but reduce the elastic modulus, i.e. the rigidity of materials.

CN105331078A discloses a technical solution of use of hyperbranched polyester in plastic processing. In the technical solution, hydroxy-terminated hyperbranched polyester is added in an amount of 0.1-5 wt. % to plastics by mass percentage, evenly mixed, extruded, granulated and dried to obtain a modified plastic product. The addition of the hyperbranched polyester to a plastic matrix such as PPC can significantly reduce the effective melt viscosity of plastics such as PPC, thus improving the melt fluidity and tensile strength of the plastics such as PPC as well as the apparent quality of plastic articles. However, in the technical solution, the addition of 0.1-5 wt. % of the hydroxy-terminated hyperbranched polyester significantly reduces the elongation at break from 586.91% of the comparative example to 3.32%-5.98% of the inventive example.

CN 103703080 B discloses a thermoplastic resin composition for shock absorbing members. In the disclosure, the use of a dendritic polyester resin improves the flowability of the material during injection molding, but does not have a significant influence on the impact strength of the material.

It is desirable in the industry to develop a reinforced polycarbonate composition which has improved impact strength, increased tensile elongation at break, high process flowability and good surface appearance, and is suitable for use in housings of IT devices, consumer electronic and electrical devices and the like.

One object of the present invention is to provide a polycarbonate composition. The polycarbonate composition comprises:

A) 50-90 wt. %, preferably 60-90 wt. % and more preferably 70-85 wt. % of polycarbonate;

B) 5-45 wt. %, preferably 8-30 wt. %, more preferably 8-25 wt. % and most preferably 10-20 wt. % of mineral filler; and

C) 1.5-4.5 wt. %, preferably 1.5-4 wt. % of hydroxyl-terminated dendritic polyester.

Another object of the present invention is to provide a method for preparing a polycarbonate composition, which comprises the step of mixing the following components to prepare the polycarbonate composition:

A) 50-90 wt. %, preferably 60-90 wt. % and more preferably 70-85 wt. % of polycarbonate;

B) 5-45 wt. %, preferably 8-30 wt. %, more preferably 8-25 wt. % and most preferably 10-20 wt. % of mineral filler; and

C) 1.5-4.5 wt. %, preferably 1.5-4 wt. % of hydroxyl-terminated dendritic branched polyester.

Yet another object of the present invention is to provide use of the polycarbonate composition provided according to the present invention in the preparation of a molded article.

Still another object of the present invention is to provide a molded article prepared from the polycarbonate composition provided by the present invention.

The polycarbonate composition and the molded article provided according to the present invention have enhanced impact strength, increased tensile elongation at break, improved flowability in the technological process and good surface gloss.

In the present invention, "a plurality of" means two or more.

It is surprisingly found by the inventors that the addition of a suitable combination of a hydroxyl-terminated dendritic branched polyester component and a mineral filler component to a formulation of a polycarbonate composition can significantly improve the properties of impact strength, surface gloss, process flowability, tensile elongation at break and the like of the polycarbonate composition prepared.

The present invention provides a polycarbonate composition comprising:

A) 50-90 wt. %, preferably 60-90 wt. % and more preferably 70-85 wt. % of polycarbonate;

B) 5-45 wt. %, preferably 8-30 wt. %, more preferably 8-25 wt. % and most preferably 10-20 wt. % of mineral filler; and

C) 1.5-4.5 wt. %, preferably 1.5-4 wt. % of hydroxyl-terminated dendritic branched polyester.

**Component A: aromatic polycarbonate**

The polycarbonate composition provided by the present invention comprises a polycarbonate component as component A. The content of the polycarbonate component as component A) is 50-90 wt. %, preferably 60-90 wt. % and more preferably 70-85 wt. % based on that the weight of the polycarbonate composition is 100 wt. %.

Suitable polycarbonates include aromatic polycarbonates and/or aromatic polyester carbonates prepared according to known literatures or can be prepared according to methods known from literatures (for the preparation of aromatic polycarbonates, see for example, Schnell, "Chemistry and Physics of Polycarbonates", Interscience Publishers, 1964 as well as DE -AS 1 495 626, DE-A2 232 877, DE-A 2 703 376, DE-A 2 714 544, DE-A 3 000 610 and DE-A 3 832 396; and for the preparation of aromatic polyester carbonates, see for example, DE A 3 007 934).

Aromatic polycarbonates are prepared, for example, by reaction of diphenols with carbonic acid halides, preferably phosgene and/or with aromatic dicarbonic acid dihalides (Dicarbonsauredihalogeniden), preferably benzenedicarboxylic acid dihalides, by a phase boundary process, preferably using chain terminators, e.g. monophenols, and optionally using branching agents which are trifunctional or more than trifunctional, e.g. triphenols or tetraphenols. The aromatic polycarbonates can also be prepared by reaction of diphenols with e.g. diphenyl carbonate through a melt polymerization process.

The diphenols for the preparation of the aromatic polycarbonates and/or aromatic polyester carbonates are preferably those of the formula (1):

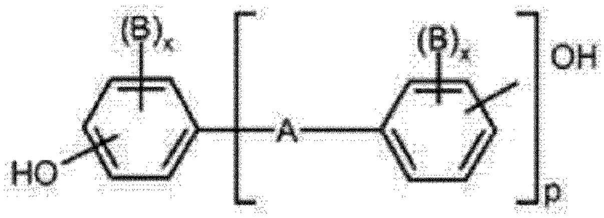

(1),

wherein

A is a single bond, $C_1$-$C_5$ alkylene, $C_2$-$C_5$ alkylidene, $C_5$-$C_6$ cycloalkylidene, -O-, -SO-, -CO-, -S-, $SO_2$-, $C_6$-$C_{12}$-arylene to which other aromatic rings optionally containing heteroatoms may be fused, or a group of the formula (2) or (3):

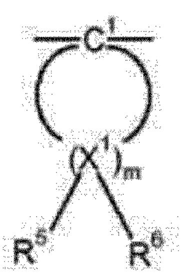

(2)

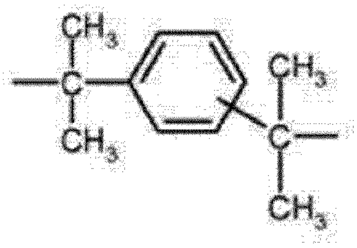

(3)

B is in each case $C_1$-$C_{12}$ alkyl, preferably methyl; or halogen, preferably chlorine and/or bromine,

x is in each case independently 0, 1 or 2,

p is 1 or 0, and

$R^5$ and $R^6$ can be selected individually for each $X^1$, and are each independently hydrogen or $C_1$-$C_6$ alkyl, preferably hydrogen, methyl or ethyl,

$X^1$ is carbon, and

m denotes an integer from 4 to 7, preferably 4 or 5,

with the proviso that Rand $R^6$ are both alkyl on at least one atom $X^1$.

Preferred diphenols include hydroquinone, resorcinol, dihydroxydiphenols, bis-(hydroxyphenyl)-$C_1$-$C_5$-alkanes, bis-(hydroxyphenyl)-$C_5$-$C_6$-cycloalkanes, bis-(hydroxyphenyl)-ethers, bis-(hydroxyphenyl)-sulfoxides, bis-(hydroxyphenyl)-ketones, bis-(hydroxyphenyl)-sulfones and $\alpha,\alpha$-bis-(hydroxyphenyl)-diisopropyl-benzenes as well as the ring-brominated and/or ring-chlorinated derivatives thereof.

Particularly preferred diphenols include 4,4'-dihydroxybiphenyl, bisphenol-A, 2,4-bis(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, for example, 2,2-bis(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-bis-(4-hydroxyphenyl)-propane (bisphenol-B) is particularly preferred.

These diphenols may be used either alone or in any mixture. The diphenols are known from literatures or available according to methods known from literatures.

Chain terminators which are suitable for the preparation of thermoplastic aromatic polycarbonates are, for example, phenol, p-chlorophenol, p-tert-butylphenol or 2,4,6-tribromophenol, but also long-chain alkylphenols such as 4-[2-(2,4,4-trimethylpentyl)]-phenol and 4-(1,3-tetramethylbutyl)-phenol according to DE-A 2 842 005, or monoalkylphenols or dialkylphenols having 8 to 20 carbon atoms in total in alkyl substituents, such as 3,5-di-tert-butylphenol, p-iso-octylphenol, p-tert-octylphenol, p-dodecylphenol and 2-(3,5-dimethylheptyl)-phenol and 4-(3,5-dimethylheptyl)-phenol. The amount of chain terminators used is in general between 0.5 mol% and 10 mol%, based on the sum of the moles of the diphenols used in each case.

The thermoplastic aromatic polycarbonates have an average molecular weight (weight average molecular weight M, measured by GPC (gel permeation chromatography) using a polycarbonate as a standard) of 15,000-80,000 g/mol, preferably 19,000-32,000 g/mol and particularly preferably 22,000-30,000 g/mol.

The thermoplastic aromatic polycarbonates can be branched in a known manner, and more specifically, preferably by incorporation of 0.05-2.0 mol%, based on the sum of the diphenols used, of compounds which are trifunctional or more than trifunctional, for example those having three and more phenolic groups. Linear polycarbonates are preferably used and polycarbonates based on bisphenol A are more preferably used.

Both homopolycarbonates and copolycarbonates are suitable. Based on the total amount of the diphenols used, 1-25 wt. %, preferably 2.5-25 wt. % of polydiorganosiloxanes having hydroxyaryloxy end groups can also be used for the preparation of the copolycarbonates suitable as the component A according to the present invention. These are known (US 3 419 634) and can be prepared according to methods known from the literature. Copolycarbonates containing polydiorganosiloxanes are also suitable; and the preparation of the copolycarbonates containing polydiorganosiloxane is, for example, described in DE-A 3 334 782.

Aromatic dicarboxylic acid dihalides for the preparation of the aromatic polyester carbonates are preferably diacid dichlorides of isophthalic acid, terephthalic acid, diphenyl ether-4,4'-dicarboxylic acid and naphthalene-2,6-dicarboxylic acid.

Mixtures of the diacid dichlorides of isophthalic acid and terephthalic acid in a ratio of 1:20 to 20:1 are particularly preferred. A carbonic acid halide, preferably phosgene, is additionally used in combination as a bifunctional acid derivative in the preparation of polyester carbonates.

In addition to the monophenols already mentioned, chain terminators for the preparation of the aromatic polyester carbonates may also be chlorocarbonates thereof, acid chlorides of aromatic monocarboxylic acids which can optionally be substituted by $C_1$-$C_{22}$ alkyl or halogen atoms, and aliphatic $C_2$-$C_{22}$ monocarboxylic acid chlorides.

The amount of chain terminators is in each case, 0.1-10 mol%, based on the moles of diphenols in the case of phenolic chain terminators and based on the moles of dicarboxylic acid dichlorides in the case of monocarboxylic acid chloride chain terminators.

One or more aromatic hydroxycarboxylic acids can additionally be used in the preparation of the aromatic polyester carbonates.

The aromatic polyester carbonates may be either linear or branched in a known manner (see DE-A 2 940 024 and DE-A 3 007 934 for details), wherein the linear polyester carbonates are preferred.

As branching agents, for example, carboxylic acid chlorides which are trifunctional or more than trifunctional, such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, may be used in an amount of 0.01-1.0 mol% (based on the dicarboxylic acid dichlorides used), or phenols which are trifunctional or more than trifunctional, such as phloroglucinol, 4,6-dimethyl-2,4,6-tri-(4-hydroxyphenyl)-hept-2-ene, 4,6-dimethyl-2,4-6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis(4-hydroxyphenyl)-cyclohexyl]-propane, 2,4-bis(4-hydroxyphenyl-isopropyl)-phenol, tetra-(4-hydroxyphenyl)-methane, 2,6-bis(2-hydroxy-5-methylbenzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane or 1,4-bis[4,4'-dihydroxytriphenyl)-methyl]-benzene, may be used in an amount of 0.01-1.0 mol% (based on the diphenols used). Phenolic branching agents can be previously introduced with the diphenols; and acid chloride branching agents can be introduced together with the acid dichlorides.

The content of carbonate structural units in the thermoplastic aromatic polyester carbonates can vary arbitrarily. The content of carbonate groups is preferably up to 100 mol%, in particular up to 80 mol%, particularly preferably up to 50 mol%, based on the sum of ester groups and carbonate groups. Both the ester moiety and the carbonate moiety of the aromatic polyester carbonates may be present in the form of blocks or randomly distributed in a polycondensate.

The thermoplastic aromatic polycarbonates and the polyester carbonates may be used either alone or in any mixture.

## Component B: mineral filler

The polycarbonate composition provided by the present invention comprises 5-45 wt. %, preferably 8-30 wt. %, more preferably 8-25 wt. % and most preferably 10-20 wt. % of a mineral filler based on that the weight of the polycarbonate composition is 100 wt. %.

Inorganic fillers suitable for the present invention include various types of inorganic fillers in the form of particles, flakes and fibers. Specific examples include mica, talc, calcium carbonate, wollastonite, barium sulfate, silica, kaolin, calcined kaolin, inorganic whiskers, glass microspheres (solid or hollow), glass sheets, glass fibers, basalt fibers, carbon fibers, boron nitride, graphite and combinations of two or more thereof. Mineral fillers such as mica, talc, wollastonite, kaolin and calcined kaolin are preferred in the present invention.

Particulate and flaky mineral fillers may have an average particle size of 0.1-40 μm, preferably 0.1-15 μm and more preferably 0.1-3 μm. Fibrous mineral fillers may have an average diameter of 1-30 μm and a length-diameter ratio of 4-100, and preferably have an average diameter of 3-20 μm and a length-diameter ratio of 5-30. The mineral filler of the present invention particularly preferably comprises kaolin having an average particle size of 0.1-2 μm and talc having an average particle size of 0.5-3 μm. The above average particle size refers to the average Stokes equivalent particle size determined by a sedimentation method.

According to the present invention, the addition of a combination of the mineral filler and the hydroxyl-terminated dendritic branched polyester to the polycarbonate composition can allow a coating to be formed on particle surfaces of the mineral filler to improve the bonding between a polycarbonate matrix and mineral filler particles, thus improving their compatibility and enabling the filler to be well dispersed in the matrix.

In the composition of the present invention, the combination of the mineral filler (especially kaolin and talc) and the hydroxyl-terminated dendritic branched polyester can significantly improve the performance of the polycarbonate composition.

## Component C: hydroxyl-terminated dendritic branched polyester

The polycarbonate composition provided by the present invention comprises 1.5-4.5 wt. %, preferably 1.5-4 wt. % of a hydroxyl-terminated dendritic branched polyester based on that the weight of the polycarbonate composition is 100 wt. %.

It is found by the inventors that a combination of a suitable hydroxyl-terminated dendritic branched polyester and a suitable mineral filler in the polycarbonate composition can significantly improve the impact resistance and tensile elongation at break of the polycarbonate composition, and provide the polycarbonate composition with the properties of good flowability in the technological process, surface gloss and the like.

The hydroxyl-terminated dendritic branched polyester has a dendritic structure or a three-dimensional spherical structure, and comprises branches in a layered structure, with a large number of active hydroxyl end groups on the surface. The molecular size and molecular weight of the hydroxyl-terminated dendritic branched polyester depend on the number of layers in its molecular structure (or the number of iterations, generation). The dendritic branched polyester has a number average molecular weight of 1,000-40,000 g/mol, preferably 5,000-20,000 g/mol. The number average molecular weight is determined by GPC (gel permeation chromatography) using a solvent capable of dissolving a dendritic branched polyester resin.

The hydroxyl-terminated dendritic branched polyester comprises hydroxyl-terminated dendritic polyesters and hydroxyl-terminated hyperbranched polyesters.

The dendritic polyester comprises terminal units and branching units. The terminal units are always located at terminals of the branching units (i.e. outermost layers of molecules), and are generally unreacted monomer groups, preferably hydroxyl group or derivatives thereof in the present invention. The branching units are formed from organic units with three or more branches which are directly bonded via ester bonds or connected by other organic units comprising ester groups.

The dendritic polyester is generally synthesized in a stepwise manner by iteration, wherein a generation of molecule is formed in each step of synthesis. A dendritic polymer generally has a perfect regular structure. Preparation methods of dendritic polyesters can be found in the literature Prog. Polym. Sci. 25 (2000) 453-571, and CN 103703080 B.

The molecular structures of dendritic polyesters are schematically showed by formula (4) and formula (5). A basic skeleton of dendritic polyester with three branches is schematically showed by formula (4). A basic skeleton of dendritic polyester with four branches is schematically showed by formula (5). R and D in formula (4) and formula (5) are respectively independent organic units.

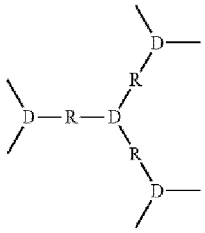 (4) 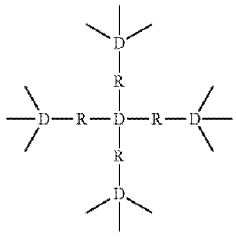 (5),

wherein the organic units R are selected from ester products obtained by reacting a polyol(s) with a polyhydroxycarboxy compound(s); and the organic units D are selected from organic residues of trifunctional and/or tetrafunctional compounds, preferably fatty chains or benzene rings with trifunctional or tetrafunctional units.

The hyperbranched polyester comprises a plurality of branching units, a plurality of linear units and a plurality of terminal units. During the formation of a dendritic branched structure, three or more functional groups per branching unit participate in a branching reaction to form two or more branches. For the linear units, generally only two functional groups participate in a branching reaction to form a linear structure. The terminal units generally comprise a plurality of unreacted monomer groups, only one functional group participates in a branching reaction, and the terminal units are always located at outermost layers of molecules. In the present invention, the terminal units are preferably hydroxyl group or derivatives thereof.

Hyperbranched polyester molecules have a configuration $A_nB_m$ (both m and n are integers, $n \geq 1$, and $m > n$), wherein A and B respectively denote a constituent part of one unit, for example, configurations $AB_2$, $AB_3$ and $A_2B_3$. Fig. (6) schematically shows branching unit D, linear unit L and terminal unit T of the hyperbranched polyester in the $AB_2$-configuration hyperbranched polyester molecules.

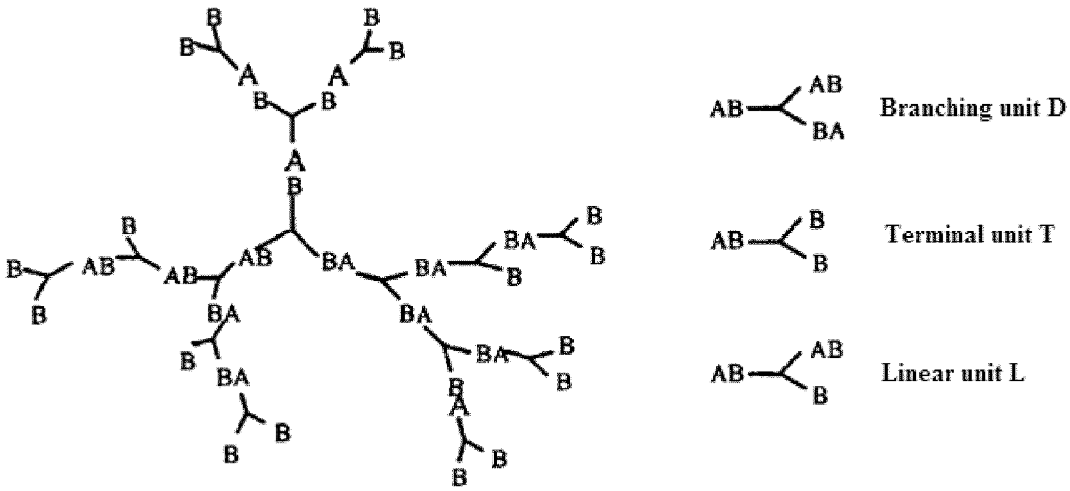


(6)

The branching units and the linear units are randomly distributed within a macromolecular framework defined by the terminal units such that the hyperbranched polymer has a lower degree of branching and a relatively irregular structure. The branching units and the linear units of the hyperbranched polyester comprise ester groups as shown in the formula (7), which may be either of fatty ester groups and aromatic ester groups or combinations thereof.

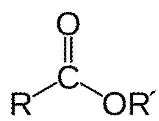 (7)

For the fatty ester groups, both R and R' are carbon chains, and the number of carbon atoms may be 1-10, preferably 2-5. For the aromatic ester groups, one or both of R and R' comprise benzene rings, and the number of which may be 1-8, preferably 1-3.

The degree of molecular structure of the hyperbranched polyester being perfect is described by the degree of

branching DB as shown in the equation (8):

$$DB = \frac{D+T}{D+T+L} (8)$$

wherein D, L and T respectively denote the number of the branching units D, the linear units L and the terminal units T in the hyperbranched polyester molecules. The degree of branching DB of the hyperbranched polyester is typically 35%-90%. In the present invention, the degree of branching DB of the hyperbranched polyester is preferably 50%-90%.

Preparation methods of hyperbranched polyesters can be found in the literature European Polymer Journal 40 (2004) 1257-1281, and CN105331078A, WO 96/19537, GB 2 272 904, CN 1649931 A, CN102010504A, CN102070775B and the like.

In the present invention, either a certain generation of hydroxyl-terminated dendritic branched polyesters, preferably four-layer iterative hydroxyl-terminated dendritic polyesters, or mixtures of a plurality of different generations of dendritic branched polyesters may be used in the polycarbonate composition. The four-layer iterative hydroxyl-terminated dendritic polyester has a relatively low melt viscosity, and has high-density functional groups on the surfaces thereof relative to linear polymers.

In the particular inventive examples of the present invention, the hydroxyl-terminated dendritic branched polyester used is CYD2106 provided by Weihai CY Dendrimer Technology Co., Ltd.

## Other optional components

In addition to the components A), B) and C), the polycarbonate composition according to the present invention may also comprise common additives suitable for the industry, for example, release agents (e.g. pentaerythritol tetrastearate), stabilizers (e.g. UV/light stabilizers, heat stabilizers, antioxidants, transesterification inhibitors and hydrolytic protective agents), antistatic agents (e.g. conductive carbon black, carbon fibers, carbon nanotubes, and organic antistatic agents such as polyalkylene ethers, alkyl sulfonates or polyamide-containing polymers) as well as impact modifiers and pigments. Particularly, in addition to glass fibers, mineral enhancers and carbon fibers, the composition may comprise other common polymeric additives such as flame retardants and antidripping agents.

In some IT and electronic device applications, a certain flame retardancy is required, so an appropriate type and amount of flame retardants commonly used in the industry may also be added as desired to the formulation of the polycarbonate composition according to the present invention. BDP (bisphenol A bis(diphenyl phosphate)), triphenyl phosphate (TPP), polyphosphazene and resorcinol bis(diphenyl phosphate) (RDP) are common flame retardants for a polycarbonate mixture. The flame retardants may include antidripping agents. As antidripping agents, it is preferable to use polytetrafluoroethylene (PTFE) or PTFE-containing compositions, for example, PTFE masterbatches with styrene-containing or methyl methacrylate-containing polymers or copolymers.

An antidripping agent is used in an amount of 0.05-1 wt. %, preferably 0.2-0.9 wt. % and more preferably 0.3-0.8 wt. % based on that the weight of the polycarbonate composition is 100 wt. %.

Fluorinated polyolefins used as antidripping agents have a high molecular weight, a glass transition temperature of above -30 °C, generally above 100 °C, a fluorine content of preferably 65-76 wt. %, particularly 70-76 wt. % (based on that the total weight of the fluorinated polyolefins is 100%), and an average particle diameter dso of 0.05-1000 μm, preferably 0.08-20 μm. The fluorinated polyolefin generally has a density of 1.2-2.3 g/cm$^3$. Preferred fluorinated polyolefins are polytetrafluoroethylene, polyvinylidene fluoride, tetrafluoroethylene/hexafluoropropylene copolymers and ethylene/tetrafluoroethylene copolymers. The fluorinated polyolefins are known (see "Vinyl and Related Polymers" by Schildknecht, John Wiley & Sons, Inc., New York, 1962, pages 484-494; "Fluoropolymers" by Wall, Wiley Interscience, John Wiley & Sons, Inc., New York, Volume 13, 1970, pages 623-654; "Modern Plastics Encyclopaedia", 1970-1971, Volume 47, No. 10A, October 1970, McGraw-Hill Inc., New York, pages 134 and 774; "Modern Plastics Encyclopaedia", 1975-1976, October 1975, Volume 52, No. 10A, McGraw-Hill, Inc., New York, pages 27, 28 and 472, and US-PS 3 671 487, 3 723 373 and 3 838 092).

The fluorinated polyolefins can be prepared by known methods, for example by polymerizing tetrafluoroethylene in an aqueous medium with a catalyst that forms free radicals, for example sodium peroxydisulfate, potassium peroxydisulfate or ammonium peroxydisulfate under a pressure of 7-71 kg/cm$^2$ and at a temperature of 0-200°C, preferably 20-100°C (for further details, see for example U.S. Pat. No. 2 393 967). Depending on usage forms, these materials may have a density of 1.2-2.3 g/cm$^3$ and an average particle size of 0.05-1000 μm.

The preferred fluorinated polyolefins according to the present invention have an average particle diameter of 0.05-20 μm, preferably 0.08-10 μm, and a density of 1.2-1.9 g/cm$^3$.

Suitable fluorinated polyolefins that can be used in the form of powder are tetrafluoroethylene polymers with an average particle diameter of 100-1000 μm and a density of 2.0-2.3 g/cm$^3$. Suitable tetrafluoroethylene polymer powders are common commercial products and are supplied for example by DuPont under the trade name Teflon®.

In the present invention, besides preferably a combination of BDP and PTFE, the flame retardant may also preferably be selected from potassium perfluorobutane sulfonate and its combination with PTFE.

As stabilizers, it is preferable to use sterically hindered phenols and phosphites or mixtures thereof, for example, Irganox® B900 (Ciba Speciality Chemicals), in an amount of 0.01-0.5 part by weight, preferably 0.03-0.4 part by weight and particularly preferably 0.06-0.3 part by weight.

In addition to other optional additives, 0.2-1.0 part by weight of a release agent, preferably 0.3-0.8 part by weight of a release agent and particularly preferably pentaerythritol tetrastearate may also be added.

Furthermore, a black pigment (e.g. a carbon black pigment) is preferably added.

According to the present invention, a combination of the hydroxyl-terminated dendritic branched polyester and other mineral fillers (e.g. talc) can also improve the performance of the polycarbonate composition. The alkalinity of talc may cause the polycarbonate to degrade in the blending process, so acid neutralizers such as citric acid and phosphorous acid are typically added to the polycarbonate composition while talc is used.

The polycarbonate composition according to the present invention can be prepared by conventional methods known to those skilled in the art. For example, the polycarbonate composition is prepared by a method comprising the steps of: 1) premixing additives (e.g. a release agent, a stabilizer) and a small portion of a polycarbonate to obtain a premixture; 2) mixing the premixture with other components such as the remaining polycarbonate component, a mineral filler component, and a hydroxyl-terminated dendritic branched polyester component; and 3) granulating the resulting mixture by for example a twin-screw extruder to obtain polycarbonate composition granules. A preferred method comprises the steps of: 1) premixing additives (e.g. a release agent, a stabilizer) and a small portion of a polycarbonate to obtain a premixture; 2) mixing a hydroxyl-terminated dendritic branched polyester component with a mineral filler component; and 3) granulating the resulting mixture by for example a twin-screw extruder to obtain polycarbonate composition granules.

The present invention further provides a method for preparing a polycarbonate composition, which comprises the step of mixing the following components:

A) 50-90 wt. %, preferably 60-90 wt. % and more preferably 70-85 wt. % of polycarbonate;

B) 5-45 wt. %, preferably 8-30 wt. %, more preferably 8-25 wt. % and most preferably 10-20 wt. % of mineral filler; and

C) 1.5-4.5 wt. %, preferably 1.5-4 wt. % of hydroxyl-terminated dendritic branched polyester.

The present invention further provides a molded article prepared from the polycarbonate composition provided according to the present invention.

The polycarbonate composition provided by the present invention and the molded article prepared therefrom have significantly improved flowability in the technological process, tensile elongation at break, impact strength, surface gloss and the like, especially tensile elongation at break and impact strength; and the combination of the hydroxyl-terminated dendritic branched polyester and kaolin or talc surprisingly improves the performance of the polycarbonate composition.

## Examples

The following examples are intended to be exemplary rather than limiting.

The ingredients used in the examples and their brief description are as follows:

| Component | Trade name | Description | Supplier |
|---|---|---|---|
| A-1 | Makrolon® M2405 | A linear polycarbonate based on bisphenol A, having a weight average molecular weight of 24,500 g/mol (determined by GPC in dichloromethane with a standard polycarbonate) | Covestro AG |
| A-2 | Makrolon® OD2015 | A linear polycarbonate based on bisphenol A, having a weight average molecular weight of 20,500 g/mol (determined by GPC in dichloromethane with a standard polycarbonate) | Covestro AG |
| B-1 | Polyfil®HG90 | Kaolin (hydrous aluminum silicate) having an average Stokes equivalent particle size (D50) of 0.2 μm | KaMin LLC |

(continued)

| Component | Trade name | Description | Supplier |
|---|---|---|---|
| B-2 | HTP Ultra 5C | Talc having an average particle size (D50) of 0.65 μm | IMI Fabi |
| Impact modifier | ABS HRG P60 | An acrylonitrile-butadiene-styrene copolymer (ABS HRG) prepared by polymerization of an emulsion having a core-shell structure | INEOS Styrolution Group GmbH |
| C | CYD2106 | A hydroxyl-terminated dendritic branched polyester having a molecular weight of 8000 g/mol and an acid value of 55±10 mg KOH/g | Weihai CY Dendrimer Technology Co., Ltd. |
| Release agent | PETS | Pentaerythritol tetrastearate (PETS) | Guangzhou Nuochi Chemical Co., Ltd. |
| Heat stabilizer (%) | Irganox B 900 | Heat stabilizer (%) | Ciba Specialty Chemicals Inc. |
| Citric acid | Citric Acid | $C_6H_8O_7$ | Univar China Ltd. |
| Carbon black pigment | BP800 | Carbon black pigment | Cabot (China) Ltd. |

In comparative examples and inventive examples, unless otherwise specified, the percentage of each component used refers to the weight percentage of the component relative to the polycarbonate composition prepared, based on that the weight of the polycarbonate composition is 100 wt. %.

Test methods

1) MVR (melt volume flow rate): measured at 260°C/5 kg according to ISO 1133-1:2011 to characterize flowability.

2) iMVR: an MVR value measured by keeping a sample at 260°C/5 kg for 15 min to characterize thermal stability.

3) ΔMVR: calculated according to (iMVR-MVR)/ MVR * 100% to characterize the degree of degradation of a resin, wherein the greater the value, the higher the degree of degradation.

4) IZOD notched impact strength and unnotched impact strength: measured at 23°C according to ISO180/A: 2000. Test samples were prepared by injection molding. The dimension was 80 mm × 10 mm × 3 mm. The cut radius was 0.25 mm. Ten samples were tested under each experimental condition to obtain impact strength values and fracture types (P, C or NB). P denotes partial break, indicating that the materials have better ductility. C denotes complete break, indicating that the materials are brittle. NB denotes no break. The impact strength values of the ten sample tests were averaged as the test results under the test conditions.

5) MAI (multiaxial impact): the resistance of the surface of a sample material to the damage caused by high-speed impact was tested according to ISO 6603-2:2000. In experimental evaluation, a multiaxial impact sample piece (100 mm × 100 mm × 1.5 mm) prepared by injection molding was used. The ductility of a test sample is denoted by its fracture mode value, wherein 1 denotes that the material is ductile and 6 denotes that the material is brittle.

In the MAI test, the following data that can damage the material can be obtained:

5.1): maximum stress

5.2): total energy

5.3): multiaxial impact-ductility.

6) Gloss: the degree to which the surface of an object is close to a mirror, as denoted by a number. A higher value

indicates that the smoothness of the surface of the object is closer to the mirror. Gloss can be evaluated by multiple methods (or instruments). Gloss mainly depends on light source illumination and a viewing angle. Instrument measurement is generally carried out by illumination at an angle of 20°, 60° or 85° and detection of signals. The unit of gloss is GU, i.e. gloss unit. The thickness h of a test sample is generally 2 mm. In the present invention, a haze-gloss meter (Model: BYK4601) produced by Germany BYK Inc. was used, and sample gloss was detected by illumination at angles of 20° and 60° and detection of signals according to the standards ISO 13803 and ASTM D523.

Table 1 shows Comparative Examples 1-3 and Inventive Examples 1-3. As shown in Table 1, each of Comparative Examples 1-3 comprises 15 wt. % of the mineral filler kaolin. In Comparative Example 1, the content of an impact modifier ABS HRG is 0 wt. %, and the polycarbonate composition sample prepared has higher ΔMVR, indicating that a polycarbonate component therein has a higher degree of degradation. 2.5 wt. % and 6 wt. % of impact modifiers ABS HRG are respectively added in Comparative Examples 2 and 3, correspondingly, the polycarbonate compositions prepared have reduced ΔMVR, but also have reduced flowability.

As shown in Table 1, a hydroxyl-terminated dendritic branched polyester component and a mineral filler kaolin component are added in each of Inventive Examples 1-3. The formulation of Inventive Example 1 comprises 1.6 wt. % of a hydroxyl-terminated dendritic branched polyester component and 15 wt. % of kaolin; and the polycarbonate composition sample prepared has a tensile elongation at break of $1.1\times10^2$% which is about 90 times that of Comparative Example 1 and about 6 times that of Comparative Example 3, and also has greatly improved notched impact strength and unnotched impact strength.

Formulations of Inventive Examples 2 and 3 respectively comprise 2.5 wt. % and 4.0 wt. % of a hydroxyl-terminated dendritic branched polyester component and 15 wt. % of kaolin; and the notched impact strength of the polycarbonate composition samples prepared is about 10 times that of Comparative Example 3.

The comparison between Inventive Examples 1-3 and Comparative Examples 1-3 can show that, compared with the polycarbonate composition sample having a formulation comprising the impact modifier ABS HRG component and 15 wt. % of the kaolin component, the polycarbonate composition sample having a formulation comprising the hydroxyl-terminated dendritic branched polyester component and 15 wt. % of the kaolin component exhibits better effects, and has improved process flowability, tensile elongation at break, impact strength and surface gloss.

The polycarbonate composition samples prepared in Comparative Examples 1-3 have a multiaxial impact-ductility test value of 5, i.e. the polycarbonate composition samples exhibit brittle fracture in the test.

In Inventive Examples 1-3, with the increase of the amount of the hydroxyl-terminated dendritic branched polyesters added, the polycarbonate composition samples have obviously reduced multiaxial impact-ductility test values, and the values are reduced to 1 in Inventive Examples 1 and 2, i.e. the polycarbonate composition samples exhibit tough fracture.

In Inventive Examples 1-3, injection-molded articles of the polycarbonate composition samples comprising the hydroxyl-terminated dendritic branched polyester components and the kaolin components have improved surface gloss.

Table 1: Comparative Examples 1-3 and Inventive Examples 1-3

| Formulation of polycarbonate composition | | | Comparative Example 1 | Comparative Example 2 | Comparative Example 3 | Inventive Example 1 | Inventive Example 2 | Inventive Example 3 |
|---|---|---|---|---|---|---|---|---|
| Component A-1 (PC) | | | 51.0 | 49.5 | 47.3 | 50.0 | 49.5 | 48.5 |
| Component A-2 (PC) | | | 33.0 | 32.0 | 30.7 | 32.4 | 32.0 | 31.5 |
| Component B-1 (kaolin) | | | 15.0 | 15.0 | 15.0 | 15.0 | 15.0 | 15.0 |
| Impact modifier ABS HRG | | | 0 | 2.5 | 6 | 0 | 0 | 0 |
| Component C (CYD2106) | | | 0 | 0 | 0 | 1.6 | 2.5 | 4 |
| Release agent PETS | | | 0.4 | 0.4 | 0.4 | 0.4 | 0.4 | 0.4 |
| Heat stabilizer B900 | | | 0.1 | 0.1 | 0.1 | 0.1 | 0.1 | 0.1 |
| Carbon black pigment CB | | | 0.5 | 0.5 | 0.5 | 0.5 | 0.5 | 0.5 |
| | | | | | | | | |
| Performance of polycarbonate composition prepared | Test condition | Unit | Comparative Example 1 | Comparative Example 2 | Comparative Example 3 | Inventive Example 1 | Inventive Example 2 | Inventive Example 3 |
| MVR | 260°C, 5 kg | $cm^3$/ 10 min | 115 | 57.3 | 24.9 | 33.8 | 36.2 | 51.4 |
| iMVR | 260°C, 5 kg, 15 min | $cm^3$/ 10 min | 158 | 70.9 | 28.5 | 41.5 | 42.2 | 53.9 |
| ΔMVR | 260°C, 5 kg | % | 37.39 | 11.83 | 3.13 | 6.70 | 5.22 | 2.17 |
| Tensile elongation at break (%) | 50 mm/min | % | 1.2 | 9.1 | 17 | $1.1\times10^2$ | 90 | 84 |
| Izod notched impact strength | 23°C, 4 mm, 5.5 J | $kJ/m^2$ | 2.5C | 4.1C | 5.7C | 16P | 54P | 56P |
| Izod unnotched impact strength | 23°C, 4 mm, 11 J | $kJ/m^2$ | 4.4C | 83C | $1.9\times10^2$C | NB | NB | NB |
| Multiaxial impact-maximum stress | 23°C | N | 453 | 888 | 4468 | 4730 | 4563 | 4406 |
| Multiaxial impact -total energy | | J | 0.78 | 1.3 | 34.0 | 45 | 43 | 39 |
| Multiaxial impact- ductility | | -- | 5.0 | 5.0 | 5.0 | 1.0 | 1.0 | 2.0 |

(continued)

| Performance of polycarbonate composition prepared | Test condition | Unit | Comparative Example 1 | Comparative Example 2 | Comparative Example 3 | Inventive Example 1 | Inventive Example 2 | Inventive Example 3 |
|---|---|---|---|---|---|---|---|---|
| Gloss | h=2 mm, 20° | GU | 37.0 | 48.9 | 41.4 | 78.4 | 88.9 | 88.5 |
| | h=2 mm, 60° | GU | 77.7 | 83.8 | 79.3 | 97.0 | 100 | 99.5 |

Table 2 shows Comparative Example 4 and Inventive Examples 4-6. Comparative Example 4 comprises 10 wt. % of the kaolin component and 6 wt. % of an impact modifier ABS HRG. Inventive Examples 4-6 respectively comprise 1.6 wt. %, 2.5 wt. % and 4 wt. % of the hydroxyl-terminated dendritic branched polyester component CYD2106 in addition to 10 wt. % of kaolin component.

Compared with Comparative Example 4, the polycarbonate composition samples prepared in Inventive Examples 4-6 exhibit higher flowability, higher tensile elongation at break and higher impact strength, and injection-molded articles thereof have higher surface gloss.

The formulation of Inventive Example 6 comprises 10 wt. % of the kaolin component and 4 wt. % of the hydroxyl-terminated dendritic branched polyester component; and the notched impact strength of the polycarbonate composition sample prepared is about 6 times that of Comparative Example 4.

Table 2: Comparative Example 4 and Inventive Examples 4-6

| Composition of formulation | | | Comparative Example 4 | Inventive Example 4 | Inventive Example 5 | Inventive Example 6 |
|---|---|---|---|---|---|---|
| Component A-1 (PC) | | | 83.0 | 87.4 | 86.5 | 85.0 |
| Component B-1 (kaolin) | | | 10.0 | 10.0 | 10.0 | 10.0 |
| ABS HRG | | | 6 | 0 | 0 | 0 |
| Component C (CYD2106) | | | 0 | 1.6 | 2.5 | 4 |
| Release agent (PETS) | | | 0.4 | 0.4 | 0.4 | 0.4 |
| Heat stabilizer (B900) | | | 0.1 | 0.1 | 0.1 | 0.1 |
| Carbon black pigment (CB) | | | 0.5 | 0.5 | 0.5 | 0.5 |
| | | | | | | |
| Performance of polycarbonate composition prepared | Test condition | Unit | Comparative Example 4 | Inventive Example 4 | Inventive Example 5 | Inventive Example 6 |
| MVR | 260°C, 5 kg | $cm^3$/10 min | 14.2 | 22.7 | 25.1 | 35.5 |
| Tensile elongation at break (%) | 50 mm/min | % | 78 | $1.2\times10^2$ | $1.3\times10^2$ | $1.1\times10^2$ |
| Izod notched impact strength | 23°C, 4 mm, 5.5 J | $kJ/m^2$ | 10C | 42P | 62P | 63P |
| Izod unnotched impact strength | 23°C, 4 mm, 11 J | $kJ/m^2$ | NB | NB | NB | NB |
| Multiaxial impact-maximum stress | 23°C | N | 4525 | 4922 | 4836 | 4636 |
| Multiaxial impact-total energy | | J | 40 | 50 | 49 | 43 |
| Multiaxial impact-ductility | | -- | 1.0 | 1.0 | 1.0 | 1.0 |
| Gloss | h=2 mm, 20° | GU | 51.6 | 92.6 | 94.6 | 91.8 |
| | h=2 mm, 60° | GU | 86.2 | 101 | 102 | 100 |

Table 3 shows Comparative Example 5 and Inventive Examples 7-9. As shown in Table 3, Comparative Example 5 comprises 20 wt. % of kaolin component and 6 wt. % of the impact modifier ABS HRG; and Inventive Examples 7-9 respectively comprise 1.6 wt. %, 2.5 wt. % and 4 wt. % of the hydroxyl-terminated dendritic branched polyester component CYD2106 in addition to 20 wt. % of the kaolin component.

Compared with Comparative Example 5, the polycarbonate composition samples prepared in Inventive Examples 7-9 exhibit higher flowability, higher tensile elongation at break and higher impact strength, and injection-molded

articles thereof have higher surface gloss.

The notched impact strength of the polycarbonate composition sample prepared in Inventive Example 9 is about 15 times that of Comparative Example 5, and an injection-molded article of the polycarbonate composition sample also has improved surface gloss.

Table 3: Comparative Example 5 and Inventive Examples 7-9

| Composition of formulation | | | Comparative Example 5 | Inventive Example 7 | Inventive Example 8 | Inventive Example 9 |
|---|---|---|---|---|---|---|
| Component A-1 (PC) | | | 73 | 77.4 | 76.5 | 75 |
| Component B-1 (kaolin) | | | 20.00 | 20.00 | 20.00 | 20.00 |
| ABS HRG | | | 6 | 0 | 0 | 0 |
| Component C (CYD2106) | | | 0 | 1.6 | 2.5 | 4 |
| Release agent (PETS) | | | 0.4 | 0.4 | 0.4 | 0.4 |
| Heat stabilizer (B900) | | | 0.1 | 0.1 | 0.1 | 0.1 |
| Carbon black pigment (CB) | | | 0.5 | 0.5 | 0.5 | 0.5 |
| | | | | | | |
| Performance of polycarbonate composition sample | Test condition | Unit | Comparative Example 5 | Inventive Example 7 | Inventive Example 8 | Inventive Example 9 |
| MVR | 260°C, 5 kg | cm$^3$/10 min | 24.2 | 28.7 | 25.1 | 29.3 |
| Tensile elongation at break (%) | 50 mm/min | % | 5.8 | 23 | 72 | 67 |
| Izod notched impact strength | 23°C, 4 mm, 5.5 J | kJ/m$^2$ | 3.9C | 7.5C | 32P | 59P |
| Izod unnotched impact strength | 23°C, 4 mm, 11J | kJ/m$^2$ | 56C | 1.7×10$^2$P | NB | NB |
| Multiaxial impact-maximum stress | 23°C | N | 4037 | 4768 | 4582 | 4282 |
| Multiaxial impact-total energy | | J | 24 | 42 | 43 | 38 |
| Multiaxial impact-ductility | | -- | 6.0 | 1.0 | 1.0 | 1.0 |
| Gloss | h=2 mm, 20° | GU | 32.6 | 54.8 | 78.7 | 85.9 |
| | h=2 mm, 60° | GU | 72.8 | 87.6 | 97.3 | 99.1 |

Table 4 shows Comparative Example 6 and Inventive Example 10.

The polycarbonate composition provided by the present invention also exhibits superior performance for other types of fillers. In Comparative Example 6, a formulation of a polycarbonate composition comprises 15 wt. % of talc and 6 wt. % of the impact modifier ABS HRG. In Inventive Example 10, a formulation of a polycarbonate composition comprises 15 wt. % of talc and 2.5 wt. % of the hydroxyl-terminated dendritic branched polyester component CYD2106.

As shown in Table 4, compared with Comparative Example 6, the polycarbonate composition prepared in Inventive Example 10 has significantly improved flowability, tensile elongation at break, impact strength and surface gloss, and its ductility level also changes from relative brittleness to higher toughness (the value is reduced) in the multiaxial impact test.

Table 4: Comparative Example 6 and Inventive Example 10

<table>
<tr><td colspan="3">Composition of formulation</td><td>Comparative Example 6</td><td>Inventive Example 10</td></tr>
<tr><td colspan="3">Component A-1 (PC)</td><td>47.3</td><td>49.4</td></tr>
<tr><td colspan="3">Component A-2 (PC)</td><td>30.6</td><td>32.0</td></tr>
<tr><td colspan="3">Component B-2 (talc)</td><td>15.0</td><td>15.0</td></tr>
<tr><td colspan="3">ABS HRG</td><td>6</td><td>0</td></tr>
<tr><td colspan="3">Component C (CYD2106)</td><td>0</td><td>2.5</td></tr>
<tr><td colspan="3">Release agent (PETS)</td><td>0.4</td><td>0.4</td></tr>
<tr><td colspan="3">Heat stabilizer (B900)</td><td>0.1</td><td>0.1</td></tr>
<tr><td colspan="3">Citric acid</td><td>0.1</td><td>0.1</td></tr>
<tr><td colspan="3">Carbon black (CB)</td><td>0.5</td><td>0.5</td></tr>
<tr><td colspan="5"></td></tr>
<tr><td>Performance of polycarbonate composition sample</td><td>Test condition</td><td>Unit</td><td>Comparative Example 6</td><td>Inventive Example 10</td></tr>
<tr><td>MVR</td><td>260°C, 5 kg</td><td>$cm^3/10$ min</td><td>15.9</td><td>35.8</td></tr>
<tr><td>Tensile elongation at break (%)</td><td>50 mm/min</td><td>%</td><td>13</td><td>36</td></tr>
<tr><td>Izod notched impact strength</td><td>23°C, 4 mm, 5.5 J</td><td>$kJ/m^2$</td><td>9.6C</td><td>17P</td></tr>
<tr><td>Izod unnotched impact strength</td><td>23°C, 4 mm, 11J</td><td>$kJ/m^2$</td><td>$1.7\times10^2$P</td><td>NB</td></tr>
<tr><td>Multiaxial impact-maximum stress</td><td rowspan="3">23°C</td><td>N</td><td>4444</td><td>4650</td></tr>
<tr><td>Multiaxial impact-total energy</td><td>J</td><td>39</td><td>40</td></tr>
<tr><td>Multiaxial impact- ductility</td><td>--</td><td>2.7</td><td>1.3</td></tr>
<tr><td>Gloss</td><td>h=2 mm, 20°</td><td>GU</td><td>30.8</td><td>49.5</td></tr>
</table>

It is found from the present invention that the hydroxyl-terminated dendritic branched polyester and the mineral filler (especially kaolin and talc) have a particular synergistic action.

## Claims

**1.** A polycarbonate composition, comprising:

A) 50-90 wt. %, preferably 60-90 wt. % and more preferably 70-85 wt. % of polycarbonate;
B) 5-45 wt. %, preferably 8-30 wt. %, more preferably 8-25 wt. % and most preferably 10-20 wt. % of mineral filler; and
C) 1.5-4.5 wt. %, preferably 1.5-4 wt. % of hydroxyl-terminated dendritic branched polyester.

**2.** The polycarbonate composition according to claim 1, wherein the mineral filler is selected from the group consisting of mica, talc, calcium carbonate, wollastonite, barium sulfate, silica, kaolin, inorganic whiskers and combinations of two or more thereof, preferably selected from the group consisting of kaolin, talc and a combination thereof.

**3.** The polycarbonate composition according to claim 2, wherein the hydroxyl-terminated dendritic branched polyester has a dendritic structure or a three-dimensional spherical structure.

**4.** The polycarbonate composition according to any of claims 1-3, wherein the hydroxyl-terminated dendritic branched polyester is selected from the group consisting of hydroxyl-terminated dendritic polyester, hydroxyl-terminated hyperbranched polyester and a combination thereof.

**5.** The polycarbonate composition according to claim 4, wherein the hydroxyl-terminated dendritic polyester comprises a plurality of branching units and a plurality of terminal units, the branching units comprise a plurality of branches, each of the plurality of branches has a layered iterative structure, and the plurality of terminal units are respectively located at terminals of the plurality of branches.

**6.** The polycarbonate composition according to claim 5, wherein the terminal units are selected from hydroxyl group or derivatives thereof, or the branching units are selected from ester products obtained by reacting a polyol(s) with a polyhydroxycarboxy compound(s).

**7.** The polycarbonate composition according to claim 5, wherein the hydroxyl-terminated dendritic polyester has a four-layer iterative structure.

**8.** The polycarbonate composition according to claim 4, wherein the hydroxyl-terminated hyperbranched polyester comprises a plurality of terminal units, a plurality of linear units and a plurality of branching units, the branching units comprise a plurality of branches, the plurality of terminal units are respectively located at terminals of the plurality of branches, and the plurality of branching units and the plurality of linear units are randomly distributed within a molecular framework enclosed by the plurality of terminal units.

**9.** The polycarbonate composition according to claim 8, wherein the branching units are selected from organic residues of trifunctional and/or tetrafunctional compounds, preferably fatty chains or benzene rings with trifunctional or tetrafunctional units.

**10.** The polycarbonate composition according to claim 1 or 2, further comprising a flame retardant, a release agent, a stabilizer, an antistatic agent and a pigment, wherein the flame retardant is preferably a combination of BDP and PTFE.

**11.** A method for preparing a polycarbonate composition, comprising the step of mixing the following components:

A) 50-90 wt. %, preferably 60-90 wt. % and more preferably 70-85 wt. % of a polycarbonate;
B) 5-45 wt. %, preferably 8-30 wt. %, more preferably 8-25 wt. % and most preferably 10-20 wt. % of a mineral filler; and
C) 1.5-4.5 wt. %, preferably 1.5-4 wt. % of hydroxyl-terminated dendritic polyester.

**12.** Use of the polycarbonate composition according to any one of claims 1 to 10 in the preparation of an injection-molded or thermoformed molded article.

**13.** A molded article prepared from the polycarbonate composition according to any one of claims 1 to 10.

## Patentansprüche

**1.** Polycarbonatzusammensetzung, umfassend:

A) 50-90 Gew.-%, bevorzugt 60-90 Gew.-% und weiter bevorzugt 70-85 Gew.-% Polycarbonat;
B) 5 bis 45 Gew.-%, bevorzugt 8-30 Gew.-%, weiter bevorzugt 8-25 Gew.-% und ganz besonders bevorzugt 10-20 Gew.-% mineralischen Füllstoff und
C) 1,5-4,5 Gew.-%, bevorzugt 1,5-4 Gew.-%, hydroxylterminierten dendritischen verzweigten Polyester.

**2.** Polycarbonatzusammensetzung nach Anspruch 1, wobei der mineralische Füllstoff aus der Gruppe bestehend aus Glimmer, Talk, Calciumcarbonat, Wollastonit, Bariumsulfat, Siliciumdioxid, Kaolin, anorganischen Whiskern und Kombinationen von zwei oder mehr davon ausgewählt ist und bevorzugt aus der Gruppe bestehend aus Kaolin, Talk und einer Kombination davon ausgewählt ist.

**3.** Polycarbonatzusammensetzung nach Anspruch 2, wobei der hydroxylterminierte dendritische verzweigte Polyester

eine dendritische Struktur oder eine dreidimensionale kugelförmige Struktur aufweist.

4. Polycarbonatzusammensetzung nach einem der Ansprüche 1-3, wobei der hydroxylterminierte dendritische verzweigte Polyester aus der Gruppe bestehend aus hydroxylterminiertem dendritischem Polyester, hydroxylterminiertem hyperverzweigtem Polyester und einer Kombination davon ausgewählt ist.

5. Polycarbonatzusammensetzung nach Anspruch 4, wobei der hydroxylterminierte dendritische Polyester mehrere Verzweigungseinheiten und mehrere endständige Einheiten umfasst, die Verzweigungseinheiten mehrere Verzweigungen umfassen, jede der mehreren Verzweigungen eine geschichtete iterative Struktur aufweist und sich die mehreren endständigen Einheiten jeweils an Enden der mehreren Verzweigungen befinden.

6. Polycarbonatzusammensetzung nach Anspruch 5, wobei die endständigen Einheiten aus Hydroxylgruppen oder Derivaten davon ausgewählt sind oder die Verzweigungseinheiten aus durch Umsetzung eines oder mehrerer Polyole mit einer oder mehreren Polyhydroxycarboxyverbindungen erhaltenen Esterprodukten ausgewählt sind.

7. Polycarbonatzusammensetzung nach Anspruch 5, wobei der hydroxylterminierte dendritische Polyester eine vierschichtige iterative Struktur aufweist.

8. Polycarbonatzusammensetzung nach Anspruch 4, wobei der hydroxylterminierte hyperverzweigte Polyester mehrere endständige Einheiten, mehrere lineare Einheiten und mehrere Verzweigungseinheiten umfasst, die Verzweigungseinheiten mehrere Verzweigungen umfassen, sich die mehreren endständigen Einheiten jeweils an Enden der mehreren Verzweigungen befinden und die mehreren Verzweigungseinheiten und die mehreren linearen Einheiten in einem durch die mehreren endständigen Einheiten umschlossenen molekularen Gerüst statistisch verteilt sind.

9. Polycarbonatzusammensetzung nach Anspruch 8, wobei die Verzweigungseinheiten aus organischen Resten von trifunktionellen und/oder tetrafunktionellen Verbindungen, bevorzugt Fettketten oder Benzolringen mit trifunktionellen oder tetrafunktionellen Einheiten, ausgewählt sind.

10. Polycarbonatzusammensetzung nach Anspruch 1 oder 2, ferner umfassend ein Flammschutzmittel, ein Tennmittel, einen Stabilisator, ein Antistatikum und ein Pigment, wobei es sich bei dem Flammschutzmittel bevorzugt um eine Kombination von BDP und PTFE handelt.

11. Verfahren zur Herstellung einer Polycarbonatzusammensetzung, umfassend den Schritt des Mischens der folgenden Komponenten:

A) 50-90 Gew.-%, bevorzugt 60-90 Gew.-% und weiter bevorzugt 70-85 Gew.-% Polycarbonat;
B) 5-45 Gew.-%, bevorzugt 8-30 Gew.-%, weiter bevorzugt 8-25 Gew.-% und ganz besonders bevorzugt 10-20 Gew.-% mineralischen Füllstoff und
C) 1,5-4,5 Gew.-%, bevorzugt 1,5-4 Gew.-%, hydroxylterminierten dendritischen Polyester.

12. Verwendung einer Polycarbonatzusammensetzung nach einem der Ansprüche 1 bis 10 bei der Herstellung eines spritzgegossenen oder thermogeformten Formkörpers.

13. Formkörper, hergestellt aus der Polycarbonatzusammensetzung nach einem der Ansprüche 1 bis 10.

**Revendications**

1. Composition de polycarbonate, comprenant :

A) 50 à 90 % en poids, préférablement 60 à 90 % en poids et plus préférablement 70 à 85 % en poids de polycarbonate ;
B) 5 à 45 % en poids, préférablement 8 à 30 % en poids, plus préférablement 8 à 25 % en poids et le plus préférablement 10 à 20 % en poids d'une charge minérale ; et
C) 1,5 à 4,5 % en poids, préférablement 1,5 à 4 % en poids d'un polyester ramifié dendritique terminé par hydroxyle.

2. Composition de polycarbonate selon la revendication 1, la charge minérale étant choisie dans le groupe constitué par le mica, le talc, le carbonate de calcium, la wollastonite, le sulfate de baryum, la silice, le kaolin, des écailles inorganiques et des combinaisons de deux ou plus de ceux-ci, préférablement choisie dans le groupe constitué par le kaolin, le talc et une combinaison correspondante.

3. Composition de polycarbonate selon la revendication 2, le polyester ramifié dendritique terminé par hydroxyle possédant une structure dendritique ou une structure sphérique tridimensionnelle.

4. Composition de polycarbonate selon l'une quelconque des revendications 1 à 3, le polyester ramifié dendritique terminé par hydroxyle étant choisi dans le groupe constitué par un polyester dendritique terminé par hydroxyle, un polyester hyperramifié terminé par hydroxyle et une combinaison correspondante.

5. Composition de polycarbonate selon la revendication 4, le polyester dendritique terminé par hydroxyle comprenant une pluralité de motifs de ramification et une pluralité de motifs terminaux, les motifs de ramification comprenant une pluralité de ramifications, chacune parmi la pluralité de ramifications possédant une structure itérative stratifiée, et la pluralité de motifs terminaux étant respectivement située au niveau de terminaisons de la pluralité de ramifications.

6. Composition de polycarbonate selon la revendication 5, les motifs terminaux étant choisis parmi un groupe hydroxyle et des dérivés correspondants, ou les motifs de ramification étant choisis parmi des produits de type ester obtenus par mise en réaction d'un ou plusieurs polyols avec un ou plusieurs composés de type polyhydroxycarboxy.

7. Composition de polycarbonate selon la revendication 5, le polyester dendritique terminé par hydroxyle possédant une structure itérative à quatre couches.

8. Composition de polycarbonate selon la revendication 4, le polyester hyperramifié terminé par hydroxyle comprenant une pluralité de motifs terminaux, une pluralité de motifs linéaires et une pluralité de motifs de ramification, les motifs de ramification comprenant une pluralité de ramifications, la pluralité de motifs terminaux étant respectivement située au niveau de terminaisons de la pluralité de ramifications, et la pluralité de motifs de ramification et la pluralité de motifs linéaires étant distribuées de manière aléatoire dans une structure moléculaire entourée par la pluralité de motifs terminaux.

9. Composition de polycarbonate selon la revendication 8, les motifs de ramification étant choisis parmi des radicaux organiques de composés trifonctionnels et/ou tétrafonctionnels, préférablement des chaînes grasses ou des cycles benzéniques dotés de motifs trifonctionnels ou tétrafonctionnels.

10. Composition de polycarbonate selon la revendication 1 ou 2, comprenant en outre un retardateur de flamme, un agent de libération, un stabilisant, un agent antistatique et un pigment, le retardateur de flamme étant préférablement une combinaison de BDP et PTFE.

11. Procédé pour la préparation d'une composition de polycarbonate, comprenant l'étape de mélange des composants suivants :

    A) 50 à 90 % en poids, préférablement 60 à 90 % en poids et plus préférablement 70 à 85 % en poids d'un polycarbonate ;
    B) 5 à 45 % en poids, préférablement 8 à 30 % en poids, plus préférablement 8 à 25 % en poids et le plus préférablement 10 à 20 % en poids d'une charge minérale ; et
    C) 1,5 à 4,5 % en poids, préférablement 1,5 à 4 % en poids d'un polyester dendritique terminé par hydroxyle.

12. Utilisation de la composition de polycarbonate selon l'une quelconque des revendications 1 à 10 dans la préparation d'un article moulé par injection ou moulé thermoformé.

13. Article moulé préparé à partir de la composition de polycarbonate selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8871858 B
- US 8883878 B
- US 20120245262 A1
- CN 105331078 A
- CN 103703080 B
- DE AS1495626
- DE 232877 A2
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- WO 9619537 A
- GB 2272904 A
- CN 1649931 A
- CN 102010504 A
- CN 102070775 B
- US PS3671487 A
- US 3723373 A
- US 3838092 A
- US 2393967 A


### Non-patent literature cited in the description


- **SCHNELL.** Chemistry and Physics of Polycarbonates. Interscience Publishers, 1964
- *Prog. Polym. Sci.,* 2000, vol. 25, 453-571
- *European Polymer Journal,* 2004, vol. 40, 1257-1281
- **SCHILDKNECHT.** Vinyl and Related Polymers. John Wiley & Sons, Inc, 1962, 484-494
- **WALL.** Fluoropolymers. Wiley Interscience, John Wiley & Sons, Inc, 1970, vol. 13, 623-654
- Modern Plastics Encyclopaedia. McGraw-Hill Inc, October 1970, vol. 47, 134-774
- Modern Plastics Encyclopaedia. McGraw-Hill, Inc, October 1975, 27, , 28, , 472